# EUROPÄISCHE PATENTSCHRIFT

(11) **EP 2 147 157 B1**
(45) Veröffentlichungstag und Bekanntmachung des Hinweises auf die Patenterteilung: **08.04.2015**
(21) Anmeldenummer: 08748961.3
(22) Anmeldetag: 17.04.2008
(51) Int. Cl.: D21H 27/28, B32B 27/04, B44C 5/04, C03C 17/00, E04F 15/02, C04B 41/50

(54) **VERSCHLEISSSCHUTZSCHICHT**
ANTI ABRASION LAYER
COUCHE DE PROTECTION CONTRE L'USURE

(30) Priorität: 20.04.2007 DE 102007019179
(43) Veröffentlichungstag der Anmeldung: 27.01.2010
(73) Patentinhaber: Center for Abrasives and Refractories Research & Development C.A.R.R.D. GmbH, 9524 Villach (AT)
(72) Erfinder: DIDAVIDE, Maria, Cristina, A-9500 Zauchen-Villach (AT); ALARY, Jean-André, F-84800 L'Isle sur la Sorgue (FR); KUNZ, Reiner, 79725 Laufenburg (DE)
(74) Vertreter: Haseltine Lake LLP
(86) Internationale Anmeldenummer: PCT/EP2008/003085
(87) Internationale Veröffentlichungsnummer: WO 2008/128702

(56) Entgegenhaltungen:
- EP-A- 0 472 036
- WO-A-2005/023561
- DE-C1- 19 620 668
- US-A- 4 971 855

## Beschreibung

Die vorliegende Erfindung betrifft eine Verschleißschutzschicht mit einer in einen Matrixwerkstoff eingelagerten Mischung aus ungleichförmigen Hartstoffpartikeln und im Wesentlichen schneidkantenfreien, runden Feststoffpartikeln nach dem Oberbegriff des Anspruchs 1 sowie deren Verwendung zur Herstellung von verschleißfesten Oberflächen auf Holzwerkstoffen, Dekorpapieren oder mit Dekor bedruckten Holzfaserplatten zur Herstellung von Parkettfußböden, Fußbodenlaminaten, Möbeloberflächen oder Arbeitsplatten sowie zur Herstellung von verschleißfesten Oberflächenschichten auf Trägermaterialien aus Metall, Glas, Keramik, Kunststoff, Beton oder sonstigen Werkstoffen, zur Herstellung von Fliesenglasuren zur Beschichtung von Fliesen und zur Herstellung von Email für Metallbehälter oder Reaktoren für die chemische Industrie aber auch für Haushaltsgeräte und Armaturen.

Es ist allgemein bekannt, Oberflächen von Möbeln, Fußböden, Keramiken oder allgemein von Gebrauchsgegenständen aus den unterschiedlichsten Werkstoffen zu versiegeln, um einerseits die Oberfläche zu schützen und ihr andererseits ein dekoratives Aussehen zu verleihen. Dazu werden die unterschiedlichsten Matrixwerkstoffe eingesetzt, die dazu dienen, die Empfindlichkeit der Oberfläche gegenüber mechanischer, thermischer oder chemischer Beanspruchung herabzusetzen und ihr gleichzeitig ein dekoratives Aussehen zu verleihen. Häufig sind die Matrixwerkstoffe duroplastische, thermoplastische oder elastomere Kunststoffe, die unter Temperatureinwirkung oder Bestrahlung härtbar sind.

Insbesondere die Oberflächen von Möbeln und Fußböden sind häufig sehr starken mechanischen Beanspruchungen ausgesetzt und müssen dementsprechend geschützt werden.

Es ist auch allgemein bekannt, den Oberflächen von Möbeln, Fußböden, etc. durch Aufbringen von sogenannten Hochdrucklaminaten ein dekoratives Aussehen zu verleihen. Das Laminat besteht dabei häufig aus drei unterschiedlichen Schichten, einem gefärbten oder bedruckten Dekorpapier, einem darüber liegenden transparenten Overlaypapier und mehreren darunter liegenden sogenannten Kernpapieren, die als Träger für das Dekorpapier und das Overlaypapier dienen. In der Regel sind alle drei Papiere mit einem hitzehärtbaren Kunstharz imprägniert.

Weitere Ausführungsformen sind bekannt, bei denen das Dekorpapier mit einem Overlaypapier bedeckt und direkt auf eine Holzfaserplatte heissverpresst wird, ebenso ein Verfahren, bei dem das Dekor auf eine vorbehandelte und grundierte Holzfaserplatte direkt gedruckt und anschließend die Oberfläche mit einem mit Aluminiumoxidhartstoff gefüllten Klarlack auf Basis von Acrylaten beschichtet und anschließend strahlengehärtet wird.

Als hitze- und/oder strahlenhärtbare Kunstharze bzw. Lacksysteme eignen sich besonders Phenolharze, Acrylatharze, Epoxyharze, Polyesterharze, Melaminharze, Aminoplaste, Polyurethane sowie Mischungen aus diesen Komponenten. In der Vergangenheit wurde immer wieder versucht, die Abriebfestigkeit eines Laminats durch die Einlagerung von Hartstoffpartikeln in die Harzschicht, mit der beispielsweise ein kernimprägniertes Dekorpapier beschichtet wird, zu erhöhen.

So beschreiben eine Vielzahl von Veröffentlichungen und Patenten entsprechende Verfahren zur Herstellung von abriebfesten Dekorschichten bzw. Laminaten, bei denen vor allem Teilchen auf Basis von Aluminiumoxid als geeignete Hartstoffpartikel zur Herstellung von verschleißfesten Dekorschichten genannt werden. Der bevorzugte Bereich für die mittlere Korngröße dieser Teilchen liegt dabei zwischen 1 und 80 µm.

So beschreibt die US 3,928,706 A die Herstellung von verschleißfesten Dekorschichten, die aus einem Kernpapier, einem Dekorpapier, einer Verschleißschicht und einem Overlaypapier bestehen. Die Verschleißschicht aus einem hitzehärtbaren Kunstharz mit darin fein verteilten Hartstoffen mit einer Härte nach Mohs von mindestens 7 wird entweder auf eine Oberfläche des Dekor- oder des Overlaypapiers aufgebracht. Alle drei Papiere sind mit einem hitzehärtbaren Kunstharz imprägniert und werden auf die übliche Weise zu einem einheitlichen Laminat verarbeitet, indem sie bei Temperaturen von ca. 150° C zwischen hochpolierten Pressplatten verpresst werden.

Korundhaltige Verschleißschutzschichten für Dekorlaminate sind aus der WO 2005/023561 A1 bekannt.

Die EP 0 519 242 A1 beschreibt Verschleißschutzschichten von besonderer Klarheit und Brillanz, welche man dadurch erreicht, dass das Dekorpapier mit einer Verschleißschicht versehen ist, die mit Silan ummantelte Hartstoffe enthält. Auch hier erfolgt die Verarbeitung zum fertigen Laminat durch Verpressen.

In allen Fällen führt die Herstellung von verschleißfesten Laminatoberflächen durch Einlagerungen von Hartstoffen in Overlay- oder Dekorpapier oder auch die Direktbeschichtung mit hartstoffgefüllten Flüssigoverlays zu einem erheblichen Problem bei der Endfertigung der Laminate, weil sowohl beim diskontinuierlichen Betrieb unter Einsatz von Pressen mit hochpolierten Pressplatten als auch beim kontinuierlichen Betrieb mit Pressbändern die Oberflächen der Pressplatten oder Pressbänder durch den Kontakt mit den Hartstoffpartikeln verkratzt und relativ schnell unbrauchbar gemacht werden. Dieser Pressplattenverschleiß ist ein ganz wesentlicher Kostenfaktor bei der Herstellung von verschleißfesten Dekorschichten.

Die Versuche, das Verschleißproblem bei der Fertigung zu lösen, liefen meist darauf hinaus, durch entsprechende Maßnahmen den direkten Kontakt zwischen Hartstoffpartikel und Pressplatte zu vermeiden.

So beschreibt die WO 2006/013469 ein Verfahren, bei dem zunächst eine erste polymere Schicht, die Hartstoffpartikel, wie z. B. Korund, enthält, auf ein Substrat aufgetragen wird und anschließend auf diese erste abriebfeste Schicht eine zweite Polymerschicht aufgetragen wird, in die Teilchen eingelagert sind, die eine relativ hohe Härte, jedoch eine geringe Abrasivität aufweisen. Als derartige Teilchen werden beispielsweise Glaskugeln oder Glasfasern genannt.

Einen ähnlichen Weg beschreibt die EP 1 319 524 A1, in der die Aufgabe dadurch gelöst wird, dass Lack- oder Tränkharzsysteme eingesetzt werden, die Kugeln, insbesondere Glaskugeln, enthalten, die eine relativ hohe Härte, jedoch eine geringe Eigenabrasivität aufweisen. In diesem Fall wird auf den Einsatz von eigentlichen Hartstoffen vollständig verzichtet.

In der WO 02/066265 A1 wird ein Verfahren zur Herstellung eines Dekorpapiers beschrieben, bei dem abriebfeste Partikel, wie z. B. Korund oder Siliziumkarbid, die im Harz eingelagert sind, in einem zusätzlichen Arbeitsgang mit Glaskugeln oder Glasfasern beschichtet werden, um auf diese Weise den direkten Kontakt der Korund- oder Siliziumkarbidpartikel mit der Spiegeloberfläche der Presse zu vermeiden und Beschädigungen zu verhindern. So stellten die Kugeln oder Fasern den gewünschten schützenden Abstand zwischen den abriebfesten Partikeln und der Pressplatte bzw. dem Pressband sicher.

Die EP 1 339 545 B1 beschreibt eine Verschleißschutzschicht auf Basis von Kunstharz, wobei in das Kunstharzsystem neben den Hartstoffpartikeln mit einer Härte nach Mohs von mindestens 6 zusätzlich im Wesentlichen schneidkantenfreie, runde Feststoffpartikel in Form von Kugeln mit einer geringeren Härte eingelagert sind, deren mittlerer Korndurchmesser größer ist als der mittlere Korndurchmesser der Hartstoffpartikel. Auch dadurch wird erreicht, dass der direkte Kontakt der Pressplattenoberfläche mit den Hartstoffpartikeln weitgehend vermieden wird und die runden Feststoffpartikel quasi als Abstandshalter dienen.

All diese Verfahren haben jedoch den Nachteil, dass nun im äuβeren Bereich der Dekorschicht anstatt Hartstoffpartikel Partikel mit geringerer Härte gelagert sind, wodurch die Verschleißfestigkeit der Schicht insgesamt herabgesetzt wird.

Gerade im Bereich der Fußböden oder Laminatböden insbesondere in öffentlichen Gebäuden oder Industrieanlagen, aber auch bei Oberflächen von häufig benutzten Möbeln oder Arbeitsplatten spielt die Verschleißfestigkeit eine immer größere Rolle und wird als ein ganz wesentliches Verkaufsargument und Qualitätskriterium herangezogen. So werden beispielsweise Laminatböden einer Abriebklassifizierung unterzogen, wobei in einem sogenannten "Tabertest" die Beständigkeit gegen Abrieb bestimmt wird und die Böden in Abriebklassen unterteilt werden. Bei dieser Prüfung wird die Widerstandsfähigkeit der Deckschicht gegen Durchscheuern bestimmt. Der Abrieb wird dadurch erzielt, dass ein Prüfkörper unter belasteten, zylindrischen, mit definiertem Schmiergelpapier belegten Reibrädern rotiert. Die bis zu einem festgelegten Grad des Abriebes notwendige Anzahl an Umdrehungen wird gemessen.

Für diese Prüfung nach DIN EN 13329 werden aus einem Laminatbodenelement Prüfkörper mit einer Größe von etwa 100 mm x 100 mm entnommen und mit einem Markierstift in vier Quadranten aufgeteilt. Die Oberfläche des Prüfkörpers wird unter genau definierten Bedingungen (Druck, Umdrehung, etc.) mit zwei mit einem definierten Schmiergelpapier belegten Reibrädern bearbeitet, wobei die Schmiergelpapierstreifen nach jeweils 200 Umdrehungen ersetzt werden. Diese Prüfung wird so lange fortgesetzt, bis ein sogenannter Anfangsabriebpunkt (IP) erreicht ist. Der Anfangsabriebpunkt (IP) ist der Punkt, an dem erstmalig klar erkennbar ein Durchrieb des Dekordrucks auftritt und die Unterschicht in drei der vier Quadranten freigelegt wird. Auf diese Weise werden die Laminatböden in Abriebklassen zwischen AC 1 bis AC 5 eingeteilt, was einem IP-Wert von ≥ 900 bis ≥ 6000 entspricht.

Der vorliegenden Erfindung liegt nun das Problem zugrunde, die Abriebfestigkeit von Verschleißschutzschichten zu erhöhen, ohne gleichzeitig auch den Verschleiß von Pressplatten oder Pressbändern heraufzusetzen. Gelöst wird das Problem durch eine Verschleißschutzsicht mit den Merkmalen des Anspruchs 1.

Überraschenderweise wurde gefunden, dass eine Verschleißschutzschicht mit einer erhöhten Verschleißfestigkeit durch Einlagerung einer Mischung aus ungleichförmigen Hartstoffpartikeln mit einer Härte nach Mohs von mindestens 6 und im Wesentlichen schneidkantenfreien, runden Feststoffpartikeln mit einer Härte nach Mohs von mindestens 3 in einen Matrixwerkstoff wie sie in Anspruch 1 definiert wird erreicht wird. Dabei muss der mittlere Teilchendurchmesser der Feststoffpartikel gleich oder kleiner sein als der mittlere Teilchendurchmesser der Hartstoffpartikel wie in Anspruch 1 definiert.

Das überraschende Ergebnis einer Vielzahl von Verschleißfestigkeitsuntersuchungen war, dass die Verschleißfestigkeit einer Verschleißschutzschicht erhöht wird, wenn ein Teil der Hartstoffpartikel, die ursächlich für die Verschleißfestigkeit sorgen sollen, durch im Wesentlichen schneidkantenfreie, runde Feststoffpartikel ersetzt werden, die einen mittleren Teilchendurchmesser aufweisen, der gleich oder kleiner ist als der mittlere Teilchendurchmesser der Hartstoffpartikel. Dieses interessante Phänomen konnte bei einer Reihe von unterschiedlichen Matrixwerkstoffen festgestellt werden. So wurden gleichwirkende Effekte sowohl bei Lacken, Kunststoffen, Glas, Keramik oder Email gefunden.

Insbesondere konnte bei der Verwendung von duroplastischen, thermoplastischen oder elastomeren Kunststoffen als Matrixwerkstoff durch einen entsprechenden Ersatz von ungleichförmigen Hartstoffpartikeln durch schneidkantenfreie, runde Feststoffpartikel eine deutliche Steigerung der Abriebfestigkeit der Verschleißschutzschicht erreicht werden, was möglicherweise auf die besonders gute Einbindung der im Wesentlichen runden Feststoffpartikel in diesem System zurückzuführen ist. Eine bevorzugte Ausführungsform sieht vor, dass der Matrixwerkstoff ein Kunstharz auf Basis von Melamin, Acrylat, Epoxy, Polyurethan, Polyamid, Polyester, Polyimid, Kautschuk, Gummi oder Mischungen davon ist. Diese Systeme werden bevorzugt für Verschleißschutzschichten eingesetzt und eine Steigerung der Verschleißfestigkeit der entsprechenden Schichten ist von besonderer technischer Relevanz.

Der Anteil an im Wesentlichen schneidkantenfreien, runden Feststoffpartikeln in der eingelagerten Mischung kann zwischen 10 bis 50 Gew.-%, bezogen auf den Gesamtanteil der eingelagerten Teilchen, variieren. Dieser breite Anwendungsbereich macht deshalb Sinn, weil es in vielen Bereichen immer wieder zu einer Gratwanderung zwischen hohem Pressplattenverschleiß oder besonders hoher Verschleißfestigkeit kommt. Hier gilt es jedes Mal aufs Neue herauszufinden, welche Anteile an schneidkantenfreien, runden Feststoffpartikeln die eingelagerte Mischung verträgt, ohne dass ein Einbruch in der Verschleißfestigkeit zu verzeichnen ist. Hohe Anteile an runden Feststoffpartikeln führen zwar zu einem reduzierten Pressplattenverschleiß, gleichzeitig nimmt die Verschleißfestigkeit insgesamt jedoch ab. Bei den genannten Verhältnissen sind durchgängig bei allen Systemen Steigerungen der Verschleißfestigkeit im Vergleich zum Einsatz von reinen Hartstoffen festzustellen.

Die ungleichförmigen Hartstoffpartikel werden aus der Gruppe Aluminiumoxid, Korund, Schmelzkorund, Sinterkorund, Zirkonkorund, Solgelkorund, Siliziumkarbid und Borkarbid ausgesucht. Da die Mohs-Härte all dieser Stoffe deutlich über 6 liegt, spielt die Härte der Hartstoffe selber meist eine untergeordnete Rolle bei der Auswahl eines Hartstoffes für bestimmte Anwendungen. Häufig werden diese Stoffe nach Transparenz, Farbe, Druckfestigkeit und Einbindungsverhalten in der Matrix ausgesucht. So ist einer der beliebtesten Hartstoffe für den Einsatz in Verschleißschutzschichten geschmolzener Korund, der sich neben seiner hohen Härte dadurch auszeichnet, dass er in großen Mengen zur Verfügung steht, preisgünstig herzustellen ist und darüber hinaus in unterschiedlichen Farben erhältlich ist. So wird häufig für transparente Laminate Edelkorund Weiß eingesetzt, da die Transparenz und Farbneutralität der Verschleißschutzschicht auch bei relativ hohen Korundanteilen erhalten bleibt. Als schneidkantenfreie, runde Feststoffpartikel werden Vollkugeln aus Glas oder gesinterter Keramik eingesetzt. Je nach Wahl der Kugeln können zusätzliche Variationen beim Verhältnis zwischen Verschleißfestigkeit und Pressplattenverschleiß realisiert werden.

Als besonders gut geeignet haben sich Glaskugeln herausgestellt, da sie eine relativ hohe Härte besitzen, gleichzeitig transparent sind und zudem noch in großen Mengen und preisgünstig erworben werden können. Hinzu kommt, dass Glaskugeln quasi in allen gewünschten Durchmessern erhältlich sind. Neben den reinen Glaskugeln können jedoch auch Verbindungen mit geringerer oder höherer Härte als reines Glas eingesetzt werden.

Für bestimmte Anwendungen kann auch der Einsatz gesinterter schneidkantenfreier Keramikteilchen als Vollkugeln von Vorteil sein, wobei hier aber die mangelnde Transparenz deren Einsatz stark begrenzt. Beispielsweise können diese Keramikteilchen in nicht transparenten, eingefärbten Deckschichten verwendet werden, wenn es darum geht, die Härte der runden Feststoffpartikel weiter heraufzusetzen, um somit den Anteil an unregelmäßigen, ungleichförmigen Hartstoffpartikeln bei gleichbleibender Verschleißfestigkeit absenken zu können.

Generell bestehen die runden, schneidkantenfreien Feststoffpartikel als Vollkugeln im Wesentlichen aus Siliziumoxid, Aluminiumoxid, Mullit, Spinell oder Zirkonoxid bzw. Mischungen daraus. Die Farbe, die Härte und das Druck- bzw. Bruchverhalten der schneidkantenfreien, runden Feststoffpartikel kann durch zusätzliche Modifikationsbestandteile, wie z. B. Natriumoxid, Lithiumoxid, Kaliumoxid, Eisenoxid, Titanoxid, Magnesiumoxid, Calciumoxid, Neodymoxid, Lanthanoxid, Ceroxid, Yttriumoxid und/oder Boroxid variiert werden.

Die Gesamtmenge an eingelagerten festen Teilchen beträgt üblicherweise 2 bis 80 Vol.-%, bezogen auf den Matrixwerkstoff. Dies entspricht einem Anteil an eingelagerten, festen Teilchen in der Matrix in Abhängigkeit von der relativen Dichtedifferenz zwischen Matrixwerkstoff und festen Teilchen von 2 bis 200 g pro m². Für bevorzugte Ausgestaltungen, insbesondere im Laminatbereich, beträgt die Gesamtmenge an eingelagerten festen Teilchen 10 bis 50 g pro m².

Es hat sich sowohl für die Transparenz der Verschleißschutzschicht als auch für die Einbindung der Hartstoffe bzw. der schneidkantenfreien, runden Feststoffpartikel herausgestellt, dass eine Oberflächenbehandlung der Partikel mit einem Haftvermittler zu Verbesserungen bezüglich der Transparenz und Einbindung führt. Geeignete Mittel zur Oberflächenbehandlung sind Silane, insbesondere Organosilane, wie z. B. Aminoalkylsilan oder Aminoalkylalkoxysilane. Derartige Behandlungen sind bekannt und werden häufig eingesetzt, um die Einbindung von Feststoffen, insbesondere oxidischen Feststoffen, in organischen Matrixwerkstoffen zu verbessern. Insbesondere bei der Verwendung von Korund als Hartstoff und Glas-Strahlperlen als schneidkantenfreier, runder Feststoff wirkt sich eine Vorbehandlung der Teilchen oder Mischungen davon mit Aminopropyltriethoxysilan äußerst positiv auf die Einbindung und auf die Transparenz der Verschleißschutzschicht aus.

Bei einer besonderen Ausgestaltung der vorliegenden Erfindung werden zur Oberflächenbehandlung Aminoalkylalkoxysilane aus der Gruppe Aminopropyltrimethoxysilan, 3-Aminopropyltriethoxysilan, 3-Aminopropylmethyldimethoxysilan, 3-Aminopropylmethyldiethoxysilan und/oder N-(2-Aminoethyl)-3-Aminopropyltrimethoxysilan eingesetzt. Die Menge an Silan beträgt üblicherweise 0.1 bis 10 Gew.-%, bezogen auf den Anteil an Hartstoffpartikeln und/oder Feststoffpartikeln. Die Behandlung selber ist seit langem bekannt und relativ unkompliziert. So können beispielsweise Silane als 20%ige Lösung in destilliertem Wasser jeweils den Hartstoffpartikeln oder Feststoffpartikeln oder den Mischungen davon in einem Mischer direkt zugesetzt, danach gemischt und anschließend bei ca. 80° C getrocknet werden.

Die erfindungsgemäße Verschleißschutzschicht findet Verwendung zur Herstellung von verschleißfesten Oberflächen auf Holzwerkstoffen, auf imprägniertem Dekorpapier oder auf mit Dekor bedruckten Holzfaserplatten zur Herstellung von Parkettfußböden, Fußbodenlaminaten, Möbeloberflächen oder Arbeitsplatten. Darüber hinaus kann die erfindungsgemäße Verschleißschutzschicht zur Herstellung von verschleißfesten Metalloberflächen eingesetzt werden, beispielsweise im Zusammenhang mit lösemittelhaltigen oder lösemittelfreien Nass- oder Pulverlacksystemen. Eine weitere interessante Anwendung für die erfindungsgemäße Verschleißschutzschicht bezieht sich auf die Herstellung von Glasuren zur Beschichtung von Fliesen und Sanitärkeramik oder zur Herstellung von Email zur Beschichtung von Metallbehältern, Reaktoren für die chemische Industrie, Haushaltsgeräten, wie z.B. Herde, Töpfe oder Pfannen, oder Armaturen.

Im Folgenden wird die Erfindung anhand von Beispielen näher erläutert, die ausgesuchte Anwendungen im Bereich der Laminate wiedergeben, da in diesem Bereich die Bewertung der Verschleißfestigkeit standardisiert ist und somit eine Vergleichbarkeit der einzelnen Versuche gegeben ist. Dies ist jedoch nicht als Einschränkung zu sehen, vielmehr hat es sich im Rahmen der Untersuchungen gezeigt, dass sich vergleichbare Verhältnisse auch bei den übrigen oben angesprochenen Systemen einstellen.

### Beispiele

### Versuchsreihe 1 (unterschiedliche Konzentrationen an schneidkantenfreien, runden Feststoffpartikeln)

Als Ausgangsmaterial für die im Wesentlichen schneidkantenfreien, runden Feststoffpartikel wurden Glasstrahlperlen (Sovitec, FR) eingesetzt, die in Analogie zu den üblichen Absiebungen für Schleifkörnungen gemäß dem FEPA-Standard 42-D-1984 R 1993 zu einer Absiebung "Korn 220" klassiert wurden. Die Härte der Glasstrahlperlen betrug 5.1 GPa nach Vickers (HV_{0.2}) (Mohs 5) und wurde an Kugeln mit einem Durchmesser von 0.4 - 0.6 mm bestimmt.

Als Ausgangsmaterial für die ungleichförmigen Hartstoffpartikel wurde Edelkorund Weiß (Alodur ZWSK-220, Treibacher Schleifmittel AG, AT) verwendet. Härte nach Vickers (HV_{0.2}) = 20.2 GPa (Mohs 9).

In den folgenden Tabelle 1 sind die jeweiligen Siebanalysen gemäß FEPA wiedergegeben, wobei die Resultate in Gew.-% des Siebrückstandes pro Prüfsieb bzw. als Bodenanteil angegeben werden.

**Tabelle 1**

| Siebgröße (µm) | 106 | 75 | 53 | 45 | Boden |
|---|---|---|---|---|---|
| | Siebrückstände / Bodenanteil (%) | | | | |
| Alodur ZWSK-220 | 0 | 8.3 | 72.7 | 11.9 | 7.1 |
| Glasstrahlperlen Korn 220 | 0 | 3.2 | 76.3 | 15.1 | 5.4 |

In der Tabelle 2 sind die Ergebnisse der Messung der Korngröβenverteilung der gleichen Muster mittels Laserbeugung [Fa. Malvern Instruments Ltd., UK Gerätetyp: Mastersizer 2000 mit Dispergiermodul Hydro 2000S(A)] wiedergegeben. Dabei werden die Resultate typischerweise als Vol.-% (d₁₀, d₅₀, d₉₀) angegeben.

**Tabelle 2**

| Korngrößenverteilung (Vol.-%) | d_{90%} | d_{50%} | d_{10%} |
|---|---|---|---|
| | Teilchendurchmesser (µm) | | |
| Alodur ZWSK-220 | 112,0 | 74,08 | 48,68 |
| Glasstrahlperlen Korn 220 | 77.41 | 55.50 | 39.64 |

| | | | |
|---|---|---|---|
| Anmerkung: d_{50%} heißt, dass 50 % der nach mit Laserbeugung gemessenen Teilchen unter dem angegebenen µm-Wert liegen | | | |

Aus den Tabellen 1 und 2 geht hervor, dass trotz in etwa gleicher Absiebung nach FEPA die Messung mit der Laserbeugung (Malvern) eine deutlich geringere mittlere Teilchengröße d50 für die Glasstrahlperlen ergibt. Aus den Darstellungen wird ersichtlich, dass die Beschreibung von relativen Korngrößenverteilungen sehr stark von der jeweiligen Messmethode abhängt. Wenn im Folgenden die mittlere Teilchengröße genannt wird, so ist als Grundlage für die Zahlenwerte - solange es nicht explizit anders spezifiziert wird - stets die Messung mittels Laserbeugung heranzuziehen.

Die ungleichförmigen Hartstoffpartikel und die im Wesentlichen schneidkantenfreien, runden Feststoffpartikel wurden jeweils separat einer Oberflächenbehandlung unterzogen, wobei 500 g der Partikel jeweils mit 12 g einer 20-%igen Lösung von Aminopropyltriethoxysilan (AMEO, Degussa, DE) in destilliertem Wasser versetzt und anschließend in einem Zwangsmischer vermischt wurden. Die so behandelte Mischung wurde in einem Trockenschrank bei 80 °C für mehrere Stunden getrocknet.

Aus den jeweils beschichteten ungleichförmigen Hartstoffpartikel und den im Wesentlichen schneidkantenfreien, runden Feststoffpartikeln wurden dann unterschiedliche Mischungen (siehe Tabelle 1) zur Herstellung von Laminat-Prüfkörpern für den sogenannten Taber-Test nach DIN EN 13329 eingesetzt.

Dazu wurde nach dem bekannten Stand der Technik ein Dekorpapier mit Melamin-Formaldehydharz (Prefere 70 0562L, Dynea, AT), Additiven und Härtern (Melatec, CH) kernimprägniert. Auf dieses imprägnierte und feuchte Dekorpapier wurde im "Nass-in-Nass-Verfahren" die Verschleißschutzschicht in Form einer Suspension aus Melamin-Formaldehydharz mit Hartstoffpartikeln, runden Feststoffpartikeln bzw. Mischungen davon aufgetragen und anschließend in einem Trockenofen bei 145 °C bis auf eine Restfeuchte von 5 - 6 % getrocknet.

Die Konzentration an Feststoffteilchen in der Melamin-Formaldehydharz-Suspension wurde dabei so gewählt, dass der Anteil an Feststoffteilchen im fertigen Prüfkörper 25 g/m² betrug, was einem Gehalt von 30 - 40 Vol.-% Feststoffanteil, bezogen auf den Matrixwerkstoff, entsprach.

Anschließend wurde das Dekorpapier auf eine HDF-Platte gelegt und mit einem ebenfalls mit Melamin-Formaldehydharz getränkten Overlay-Papier bedeckt. Unter die HDF-Platte wurde ein Gegenzugpapier gelegt. Dieser Gesamtaufbau aus Gegenzugpapier/HDF-Platte/Dekorpapier/Overlaypapier wurde dann für 15 Sekunden bei 205 °C mit einem Druck von 350 N verpresst.

Die so erhaltenen Prüfkörper wurden einem Taber-Test unterzogen. Die Testergebnisse sind in der Tabelle 3 sowie in der entsprechenden Grafik (Abb. 1) wiedergegeben.

In der Tabelle 3 sind die Beispiele 2, 3 und 4 Beispiele der Erfindung wie sie in Anspruch 1 definiert wird.

**Tabelle 3**

| Beispiel | Alodur-ZWSK F220 d_{50%} = 74.08 µm* (Gew.-%) | Glasstrahlperlen Korn 220, d_{50%} = 55.50 µm* (Gew.-%) | Taber-Test IP-Wert (Umdrehungen) |
|---|---|---|---|
| 1 | 100 | - | 4800 |
| 2 | 80 | 20 | 5300 |
| 3 | 60 | 40 | 5000 |
| 4 | 50 | 50 | 4300 |
| 5 | 40 | 60 | 3600 |
| 6 | 20 | 80 | 2600 |
| 7 | - | 100 | 800 |

| | | | |
|---|---|---|---|
| Anmerkung: * = Laserbeugung (Malvern) | | | |

Die Beispiele 1, 5, 6, 7 in der Tabelle 3 sind Vergleichsbeispiele die nicht erfindungsgemäß sind.

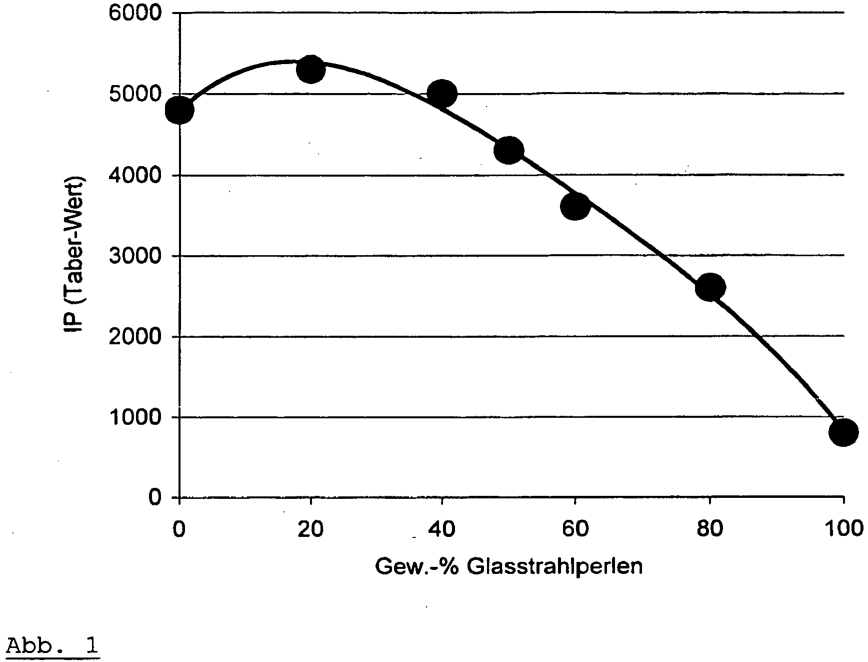

Aus den Ergebnissen in der Tabelle 1 sowie der entsprechenden grafischen Darstellung in der Abbildung 1 ist zu erkennen, dass die Verschleißfestigkeit des Laminatprüfkörpers durch den Ersatz von Hartstoffpartikeln durch weichere Glaskugeln überraschenderweise zunächst erhöht wird. Bis zu einem Anteil von fast 40 Gew.-% können Hartstoffpartikel durch weichere Glaskugeln ersetzt werden, ohne dass es zu einem wesentlichen Abfall in der Verschleißfestigkeit kommt. Dies führt nicht nur zu einer deutlichen Reduzierung des Pressplattenverschleißes, wobei im Einzelfall sogar ein Verzicht auf Overlaypapier möglich ist, sondern es kommt gleichzeitig zu einer allgemeinen Kostenreduzierung, da die Glaskugeln in der Regel preiswerter sind als die entsprechenden Hartstoffpartikel.

### Versuchsreihe 2 (unterschiedliche Größenverhältnisse d_{50%} Hartstoffe : d_{50%} Feststoffpartikel)

Bei dieser Versuchsreihe wurde die gleichen Ausgangsmaterialien wie bei der Versuchsreihe 1 eingesetzt, wobei allerdings unterschiedliche Absiebungen für die Glasstrahlperlen vorgenommen wurden. Auch in diesem Fall wurden die Absiebungen in Anlehnung an die FEPA-Norm durchgeführt.

In der Tabelle 4 sind die Korngrößenverteilungen der verwendeten Muster nach FEPA dargestellt.

**Tabelle 4**

| Siebgröße (µm) | 150 | 106 | 75 | 63 | 53 | 45 | Boden |
|---|---|---|---|---|---|---|---|
| | Siebrückstände / Bodenanteil (%) | | | | | | |
| Alodur ZWSK-220 | | 0 | 8.3 | - | 72.7 | 11.9 | 7.1 |
| | | | | | | | |
| Glasstrahlperlen Korn 180 | 0 | 39.4 | 57.2 | - | 2.7 | 0.6 | 0 |
| Glasstrahlperlen Korn 220 | | 0 | 3.2 | - | 76.3 | 15.1 | 5.4 |
| Glasstrahlperlen Feinkorn | | | 0 | 0.1 | 9.9 | 23.5 | 66.5 |

Zusätzlich sind in der Tabelle 5 die Ergebnisse der Laserbeugungsanalyse (Malvern) wiedergegeben.

**Tabelle 5**

| Korngrößenverteilung (Vol.-%) | d_{90%} | d_{50%} | d_{10%} |
|---|---|---|---|
| | Teilchendurchmesser (µm) | | |
| Alodur ZWSK-220 | 112,0 | 74,08 | 48,68 |
| | | | |
| Glasstrahlperlen Korn 180 | 124.76 | 90.07 | 64.90 |
| Glasstrahlperlen Korn 220 | 77.41 | 55.50 | 39.64 |
| Glasstrahlperlen Feinkorn | 56.30 | 34.77 | 20.87 |

Auch aus den Tabellen 4 und 5 geht hervor, dass die Beschreibung von relativen Korngrößenverteilungen sehr stark von der jeweiligen Messmethode abhängt. Wenn im Folgenden die mittlere Teilchengröße d_{50%} genannt wird, so ist als Grundlage für die Zahlenwerte - solange es nicht explizit anders spezifiziert wird - stets die Messung mittels Laserbeugung (Malvern) heranzuziehen.

Bei der Versuchsreihe 2 wurden ausschließlich 50:50-Mischungen eingesetzt. Die entsprechenden Mischungen sind unter Angabe der jeweiligen mittleren Teilchengröße d_{50%} in der Tabelle 6 zusammengefasst. Zum Vergleich wurden reine Hartstoffsuspensionen mit 50 % bzw. 100 % Hartstoffanteilen aufgeführt.

Die Herstellung der Prüfkörper für den Taber-Test erfolgte in Analogie zur Versuchsreihe 1. Die Ergebnisse der Tabertests sind in der Tabelle 6 zusammengefasst und in der Abb. 2 grafisch dargestellt.

In der Tabelle 6 sind die Beispiele 4 und 9 erfindungsgemäß wie in Anspruch 1 definiert.

**Tabelle 6**

| Beispiel | Alodur ZWSK F220 (Gew.-%) | Glasstrahlperlen (Gew.-%) | | | Taber-Test IP-Wert (Umdrehungen) |
|---|---|---|---|---|---|
| | | Korn 180 | Korn 220 | Feinkorn | |
| | d₅₀ = 74.08 µm | d_{50%} = 90.07 µm | d_{50%} = 55,50 µm | d_{50%} = 34.77 µm | |
| 8 | 50 | 50 | - | - | 3530 |
| 4 | 50 | - | 50 | | 4300 |
| 9 | 50 | - | - | 50 | 3060 |
| 10 | 50 | - | - | - | 2600 |
| 1 | 100 | - | - | - | 4800 |

Die Beispiele 8, 10 und 1 in der Tabelle 6 sind nicht erfindungsgemäße Vergleichsbeispiele.

### IP (Taber-Wert)

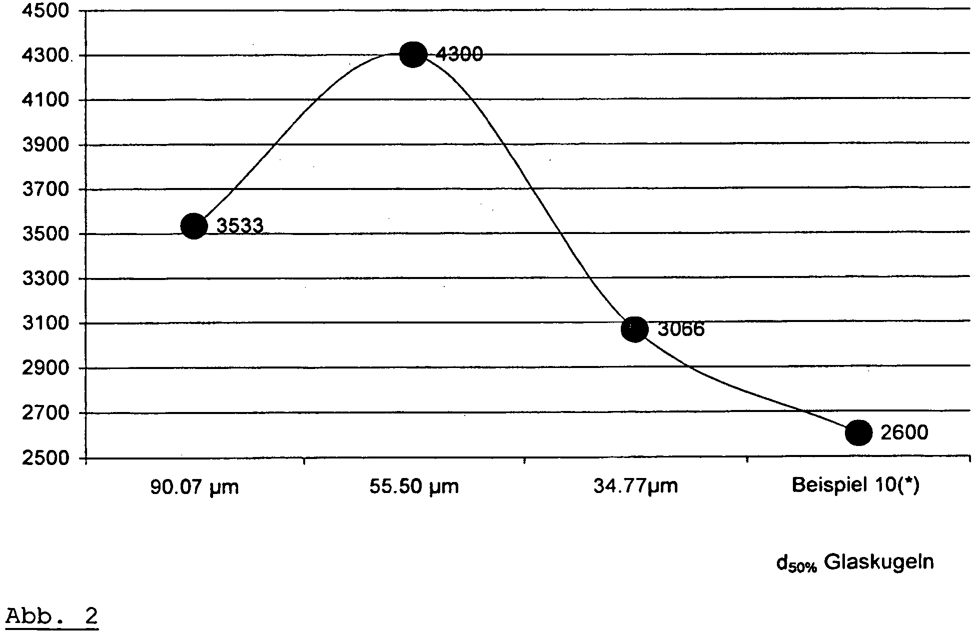

Den Ergebnissen in der Tabelle 6 und der grafischen Darstellung (Abb. 2) ist zu entnehmen, dass bereits eine verhältnismäßig geringfügige Verschiebung des Verhältnisses der mittleren Teilchengröße d_{50%} der runden Feststoffpartikeln zur mittleren Teilchengröße d_{50%} der Hartstoffpartikeln in den gröberen Bereich, bezogen auf die Feststoffpartikel, zu einer überraschend deutlichen Verschlechterung der Verschleißfestigkeit führt. Anscheinend liegt das Optimum in Bezug auf die Verschleißfestigkeit für die mittlere Teilchengröße d_{50%} der runden Feststoffpartikel leicht unterhalb der mittleren Teilchengröße d_{50%} der Hartstoffpartikel. Fällt die mittlere Teilchengröße der runden Feststoffpartikel dagegen deutlich kleiner aus (siehe Beispiel 9), so ist auch eine signifikante Verschlechterung der Verschleißfestigkeit zu verzeichnen.

Darüber hinaus fällt auf, dass generell durch die Zugabe von Glaskugeln zu einer nur mit Hartstoffpartikeln versehenen Verschleißschutzschicht (Beispiel 10 im Vergleich zu den Beispielen 8, 4 und 9) ein deutliche Zunahme der Verschleißfestigkeit zu verzeichnen ist.

## Patentansprüche

1. Verschleißschutzschicht mit einer in einen Matrixwerkstoff eingelagerten Mischung aus ungleichförmigen Hartstoffpartikeln und im Wesentlichen schneidkantenfreien, runden Feststoffpartikeln, wobei die Hartstoffpartikel eine Härte nach Mohs von mindestens 6 und die Feststoffpartikel eine Harte nach Mohs von mindestens 3 aufweisen, wobei der mittlere Teilchendurchmesser der Feststoffpartikel gleich oder kleiner ist als der mittlere Teilchendurchmesser der Hartstoffpartikel, wobei die ungleichförmigen Hartstoffpartikel ausgewählt sind aus der Gruppe Aluminiumoxid, Korund, Schmelzkorund, Sinterkorund, Zirkonkorund, Sol-Gel-Korund, Siliziumcarbid und Borcarbid, wobei die im wesentlichen schneidkantenfreien, runden Feststoffpartikel Vollkugeln aus Glas und/oder gesinterter Keramik sind, wobei der Anteil an im Wesentlichen schneidkantenfreien, runden Feststoffpartikeln in der eingelagerten Mischung 10 bis 50 Gew.-%, bezogen auf den Gesamtanteil an eingelagerten Teilchen, beträgt.

2. Verschleißschutzschicht nach Anspruch 1,
**dadurch gekennzeichnet, dass** der Matrixwerkstoff ausgewählt ist aus der Gruppe Lacke, Kunststoffe, Glas, Keramik und Email.

3. Verschleißschutzschicht nach Anspruch 1 oder 2,
**dadurch gekennzeichnet , dass** der Matrixwerkstoff ein duroplastischer, thermoplastischer oder elastomerer Kunststoff ist.

4. Verschleißschutzschicht nach einem der Ansprüche 1 bis 3,
**dadurch gekennzeichnet, dass** der Matrixwerkstoff ein Kunstharz auf der Basis von Melamin, Acrylat, Epoxy, Polyurethan, Polyamid, Polester, Polyimid, Kautschuk, Gummi oder Mischungen davon ist.

5. Verschleißschutzschicht nach Anspruch 1,
**dadurch gekennzeichnet , dass** die im Wesentlichen schneidkantenfreien, runden Feststoffpartikel im Wesentlichen aus SiO₂, Al₂O₃, Mullit, Spinell, ZrO₂ oder Mischungen daraus bestehen und zusätzlich bis zu 15 Gew.-% Modifizierungsbestandteile, wie z.B. Na₂O, Li₂O, K₂O, Fe₂O₃, TiO₂, MgO, CaO, NbO LaO, Y₂O₃, CeO und/oder B₂O₃, umfassen können.

6. Verschleißschutzschicht nach einem der Ansprüche 1 bis 5,
**dadurch gekennzeichnet, dass** die Gesamtmenge an eingelagerten festen Teilchen in der Matrix 5 - 70 Vol.-%, bezogen auf den Matrixwerkstoff, beträgt.

7. Verschleißschutzschicht nach einem der Ansprüche 1 bis 6,
**dadurch gekennzeichnet, dass** die Gesamtmenge an eingelagerten festen Teilchen in der Matrix 2 bis 200 g/m², bevorzugt 20 bis 50 g/m², beträgt.

8. Verschleißschutzschicht nach einem der Ansprüche 1 bis 7,
**dadurch gekennzeichnet, dass** die ungleichförmigen Hartstoffpartikel und/oder die im Wesentlichen schneidkantenfreien, runden Feststoffpartikel vor dem Einbringen in den Matrixwerkstoff einer Oberflächenbehandlung mit organischen und/oder anorganischen Haftvermittlern unterzogen werden.

9. Verschleißschutzschicht nach Anspruch 8,
**dadurch gekennzeichnet, dass** der Haftvermittler ein Silan ist, insbesondere ein Organosilan, wie z.B. ein Aminoalkylsilan oder ein Aminoalkylalkoxysilan aus der Gruppe Aminopropyltrimethoxysilan, 3-Aminopropyltriethoxysilan, 3-Aminopropylmethyldimethoxysilan, 3-Aminopropylmethyldimethoxysilan, 3-Aminopropylmethyldiethoxysilan und N-(2-Aminoethyl)-3-Aminopropyltrimethoxysilan.

10. Verschleißschutzschicht nach Anspruch 8 oder 9,
**dadurch gekennzeichnet, dass** der Anteil an Silan 0, 1 bis 10 Gew. -%, bezogen auf den Gesamtanteil an Hartstoffpartikeln und/oder Feststoffpartikeln, beträgt.

11. Verwendung einer Verschleißschutzschicht nach einem der Ansprüche 1 bis 10 zur Herstellung von verschleißfesten Oberflächen auf Holzwerkstoffen, auf imprägnierten Dekorpapieren oder auf mit Dekor bedruckten Holzfaserplatten zur Herstellung von Parkettfußböden, Fußbodenlaminaten, Möbeloberflächen oder Arbeitsplatten.

12. Verwendung einer Versohleißschutzschicht nach einem der Ansprüche 1 bis 8 zur Herstellung von verschleißfesten Oberflächen auf einem Grundträger aus Kunststoff, Glas, Keramik, Metall oder Beton.

13. Verwendung einer Verschleißschutzschicht nach einem der Ansprüche 1 bis 8 zur Herstellung von Glasuren zur Beschichtung von Fliesen und Sanitärkeramik sowie zur Herstellung von Email zur Beschichtung von Metallbehältern oder Reaktoren für die chemische Industrie sowie zur Beschichtung von Haushaltsgeräten und Armaturen.

## Claims

1. Anti-abrasion layer comprising a mixture of irregular hard material particles and round solid material particles that are substantially free of cutting edges, embedded in a matrix material, wherein the hard material particles have a Mohs hardness rating of at least 6, and the solid material particles have a Mohs hardness rating of at least 3, wherein the mean particle diameter of the solid material particles is equal to or less than the mean particle diameter of the hard material particles, wherein the irregular hard material particles are selected from the group consisting of aluminium oxide, corundum, molten corundum, sintered corundum, zirconium corundum, sol-gel corundum, silicon carbide and boron carbide, wherein the round solid material particles that are substantially free of cutting edges are full spheres made of glass and/or sintered ceramic, wherein the ratio of round solid material particles that are substantially free of cutting edges in the embedded mixture is 10 to 50 wt.-%, based on the total amount of embedded particles.

2. Anti-abrasion layer according to claim 1,
**characterised in that**
the matrix material is selected from the group consisting of lacquers, plastics, glass, ceramic and enamel.

3. Anti-abrasion layer according to claim 1 or 2,
**characterised in that**
the matrix material is a duroplastic, thermoplastic or elastomeric plastic.

4. Anti-abrasion layer according to one of claims 1 to 3,
**characterised in that**
the matrix material is a synthetic resin based on melamine, acrylate, epoxy, polyurethane, polyamide, polyester, polyimide, latex, rubber, or mixtures of these.

5. Anti-abrasion layer according to claim 1,
**characterised in that**
the round solid material particles that are substantially free of cutting edges essentially consist of SiO₂, Al₂O₃, mullite, spinel, ZrO₂ or mixtures thereof and may comprise additionally up to 15 wt.-% modifier components, such as for example Na₂O, Li₂O, K₂O, Fe₂O₃, TiO₂, MgO, CaO, NbO, LaO, Y₂O₃, CeO and/or B₂O₃.

6. Anti-abrasion layer according to one of claims 1 to 5,
**characterised in that**
the total amount of embedded solid particles in the matrix is 5 to 70 vol.-% based on the matrix material.

7. Anti-abrasion layer according to one of claims 1 to 6,
**characterised in that**
the total amount of embedded solid particles in the matrix is 2 to 200 g/m², preferably 20 to 50 g/m².

8. Anti-abrasion layer according to claims 1 to 7,
**characterised in that**
the irregular hard material particles and/or the round solid material particles that are substantially free of cutting edges are surface-treated with organic and/or inorganic adhesion promoters prior to their introduction into the matrix.

9. Anti-abrasion layer according to one of claim 8,
**characterised in that**
the adhesion promoter is a silane, in particular an organosilane, such as for example an aminoalkylsilane or an aminoalkylalkoxysilane selected from the group consisting of aminopropyltrimethoxysilane, 3-aminopropyltriethoxysilane, 3-aminopropylmethyldimethoxysilane, 3-aminopropylmethyldimethoxysilane, 3-aminopropylmethyldiethoxysilane, and N-(2-aminoethyl)-3-aminopropyltrimethoxysilane.

10. Anti-abrasion layer according to claim 8 or 9,
**characterised in that**
the silane ratio is 0.1 to 10 wt.-%, based on the total ratio of hard material particles and/or solid material particles.

11. Use of an anti-abrasion layer according to one of claims 1 to 10 for the production of anti-abrasion surfaces on wood materials, on impregnated décor papers or an wood fibre sheets printed with décor for the production of parquet floors, floor laminates, furniture surfaces or work surfaces.

12. Use of an anti-abrasion layer according to one of claims 1 to 8 for the production of anti-abrasion surfaces on a base carrier made of plastic, glass, ceramic, metal or concrete.

13. Use of an anti-abrasion layer according to one of claims 1 to 8 for the production of glazings for coating of tiles and sanitary ware, as well as the production of enamel for coating of metal containers or reactors for the chemical industry, as well as for the coating of home appliances and fittings.

## Revendications

1. Couche de protection contre l'usure avec un mélange incorporé dans un matériau de matrice constitué de particules de matière dure irrégulières et de particules de matière solide rondes, essentiellement exemptes de tranchant, dans laquelle les particules de matière dure présentent une dureté selon Mohs d'au moins 6 et les particules de matière solide présentent une dureté selon Mohs d'au moins 3, dans laquelle le diamètre particulaire moyen des particules de matière solide est inférieur ou égal au diamètre particulaire moyen des particules de matière dure, dans laquelle les particules de matière dure irrégulières sont sélectionnées parmi le groupe oxyde d'aluminium, corindon, corindon fondu, corindon fritté, corindon de zirconium, corindon sol-gel, carbure de silicium et carbure de bore, dans laquelle les particules de matière solide rondes, essentiellement exemptes de tranchant sont des billes pleines en verre et/ou céramique frittée, dans laquelle la proportion de particules de matière solide rondes, essentiellement exemptes de tranchant dans le mélange incorporé se monte à 10 à 50 % en poids, par rapport à la proportion totale de particules incorporées.

2. Couche de protection contre l'usure selon la revendication 1,
**caractérisée en ce que**
le matériau de matrice est sélectionné parmi le groupe vernis, plastiques, verre, céramique et émail.

3. Couche de protection contre l'usure selon la revendication 1 ou 2,
**caractérisée en ce que**
le matériau de matrice est un plastique thermodurcissable, thermoplastique ou élastomère.

4. Couche de protection contre l'usure selon une des revendications 1 à 3,
**caractérisée en ce que**
le matériau de matrice est une résine synthétique à base de mélamine, acrylate, époxy, polyuréthane, polyamide, polyester, polyimide, caoutchouc, gomme ou des mélanges de ceux-ci.

5. Couche de protection contre l'usure selon la revendication 1,
**caractérisée en ce que**
les particules de matière solide rondes, essentiellement exemptes de tranchant se composent essentiellement de SiO₂, Al₂O₃, mullite, spinelle, ZrO₂ ou des mélanges de ceux-ci et peuvent comprendre en outre jusqu'à 15 % en poids de constituants de modification, comme par exemple Na₂O, Li₂O, K₂O, Fe₂O₃, TiO₂, MgO, CaO, NbO, LaO, Y₂O₃, CeO et/ou B₂O₃.

6. Couche de protection contre l'usure selon une des revendications 1 à 5,
**caractérisée en ce que**
la quantité totale de particules solides incorporées dans la matrice se monte à 5 à 70 % en vol., par rapport au matériau de matrice.

7. Couche de protection contre l'usure selon une des revendications 1 à 6,
**caractérisée en ce que**
la quantité totale de particules solides incorporées dans la matrice se monte à 2 à 200 g/m², de préférence 20 à 50 g/m².

8. Couche de protection contre l'usure selon une des revendications 1 à 7,
**caractérisée en ce que**
les particules de matière dure irrégulières et/ou les particules de matière solide rondes, essentiellement exemptes de tranchant sont soumises à un traitement superficiel avec des promoteurs d'adhésion organiques et/ou inorganiques avant l'introduction dans le matériau de matrice.

9. Couche de protection contre l'usure selon la revendication 8,
**caractérisée en ce que**
le promoteur d'adhésion est un silane, notamment un organosilane, comme par exemple un aminoalkylsilane ou un aminoalkylalcoxysilane parmi le groupe aminopropyltriméthoxysilane, 3-aminopropyltriéthoxysilane, 3-aminopropylméthyldiméthoxysilane, 3-aminopropylméthyldiéthoxysilane et N-(2-aminoéthyl)-3-aminopropyltriméthoxysilane.

10. Couche de protection contre l'usure selon la revendication 8 ou 9,
**caractérisée en ce que**
la proportion de silane se monte à 0,1 à 10 % en poids, par rapport à la proportion totale de particules de matière dure et/ou particules de matière solide.

11. Utilisation d'une couche de protection contre l'usure selon une des revendications 1 à 10 pour la fabrication de surfaces résistantes à l'usure sur des matériaux dérivés du bois, sur des papiers décoratifs imprégnés ou sur des plaques de fibres de bois imprimées d'un décor pour la fabrication de revêtements de sol en parquet, stratifiés de revêtement de sol, surfaces de meuble ou plans de travail.

12. Utilisation d'une couche de protection contre l'usure selon une des revendications 1 à 8 pour la fabrication de surfaces résistantes à l'usure sur un support de base en plastique, verre, céramique, métal ou béton.

13. Utilisation d'une couche de protection contre l'usure selon une des revendications 1 à 8 pour la fabrication de vernissages pour le revêtement de carrelages et de céramique pour sanitaires ainsi que pour la fabrication d'émail pour le revêtement de récipients métalliques ou de réacteurs pour l'industrie chimique ainsi que pour le revêtement d'appareils ménagers et de robinetterie.
